# EUROPÄISCHE PATENTSCHRIFT

(11) **EP 3 301 807 B1**
(45) Veröffentlichungstag und Bekanntmachung des Hinweises auf die Patenterteilung: **13.11.2019**
(21) Anmeldenummer: 17188253.3
(22) Anmeldetag: 29.08.2017
(51) Int. Cl.: H02P 25/022, H02P 6/22, H02P 29/64

(54) **ZWEI-STRÄNGIGER SYNCHRONANTRIEB**
TWO STRAND SYNCHRONOUS DRIVE
ENTRAÎNEMENT SYNCHRONISÉ À DEUX BRINS

(30) Priorität: 29.09.2016 DE 102016118493
(43) Veröffentlichungstag der Anmeldung: 04.04.2018
(73) Patentinhaber: Miele & Cie. KG, 33332 Gütersloh (DE)
(72) Erfinder: Rech, Thomas, 53881 Euskirchen (DE)

(56) Entgegenhaltungen:
- EP-A2- 0 872 949
- DE-A1- 19 820 929
- DE-A1-102013 107 819

## Beschreibung

Die vorliegende Erfindung betrifft einen zwei-strängigen Synchronantrieb gemäß dem Oberbegriff des Anspruchs 1, und ein elektrisches Gerät gemäß Anspruch 3 mit einem derartigen zwei-strängigen Synchronantrieb.

Zu den bekannten elektrischen Motoren gehören die mehrsträngigen Permanentmagnet-Synchronmotoren. Um diese betreiben zu können, ist üblicherweise ein Frequenzumrichter erforderlich. Über den Frequenzumrichter können derartige Synchronmotoren geregelt betrieben werden, d.h. Drehrichtung, Drehzahl und Drehmoment des Synchronmotors lassen sich über die Frequenz und Amplitude der Ausgangswechselspannung des Frequenzumrichters vorgeben. Hierdurch kann das Drehverhalten des Synchronmotors z.B. beim Anlauf sowie in Abhängigkeit der anzutreibenden Last gezielt beeinflusst werden.

Nachteilig ist hierbei, dass derartige Frequenzumrichter zusätzliche Kosten verursachen und zusätzlichen Bauraum benötigen können. Neben dem Frequenzumrichter selbst können diese Kosten durch weitere Elektronik im Antriebssystem entstehen. Gerade diese Kosten sind bei verschiedenen einfachen Anwendungen, wie z.B. einfachen Pumpen, wie z.B. Laugenpumpen in Waschmaschinen, höchst unerwünscht, weil die durch den Frequenzumrichter geschaffenen Möglichkeiten der Regelung bzw. Steuerung des Synchronmotors für diese Anwendungen gar nicht benötigt werden und sich somit die Mehrkosten des Frequenzumrichters nicht rentieren. Zu derartigen einfachen Anwendungen bei z.B. Laugenpumpen in Waschmaschinen gehören das Abpumpen der Lauge aus dem Waschraum oder das Umfluten. In beiden Fällen ist ein geregelter Betrieb der Laugenpumpe nicht erforderlich.

Als kostengünstige Alternative zu mittels Frequenzumrichtern betriebenen Synchronmotoren ist es bei einfachen Anwendungen, wie z.B. bei Laugenpumpen in Waschmaschinen, bekannt, einsträngige Einphasen-Synchronmotoren als Antriebe der Laugenpumpe einzusetzen. Hierbei werden üblicherweise permanenterregte einsträngige Einphasen-Synchronmotoren eingesetzt, so dass auf einen elektrischen Kontakt von Stator (Ständer) zum Rotor (Läufer) mittels Schleifringen oder Bürsten verzichtet werden kann.

Vorteilhaft ist bei Synchronmotoren allgemein, dass diese im Betrieb eine zur Wechselspannung synchrone Bewegung ausführen, deren Drehzahl über die Polpaarzahl des Stators mit der Frequenz der Wechselspannung verknüpft ist. Somit ist der Betrieb eines Synchronmotors mit der Frequenz der Wechselspannung sehr einfach möglich und es kann auf kostenintensive Steuerungen sowie Frequenzumrichter verzichtet werden. Dies kommt insbesondere einfachen Anwendungen mit konstanter Drehzahl wie z.B. bei Laugenpumpen in Waschmaschinen zugute.

Nachteilig ist bei Synchronmotoren jedoch, dass beim Einschalten das Statordrehfeld sofort mit der Synchrondrehzahl rotiert, der Rotor jedoch noch stillsteht, weil er aufgrund seines Trägheitsmoments etwas Zeit zur Beschleunigung benötigt. Daher erfordern Synchronmotoren eine Anfahrhilfe. Dies bedeutet jedoch einen zusätzlichen Aufwand.

Um diesen Aufwand und die damit verbundenen Kosten sowie ggfs. erforderlichen Bauraum zu vermeiden, ist es bekannt, bei einfachen Anwendungen einphasige permanenterregte Synchronmotoren einzusetzen. Nachteilig ist hierbei jedoch, dass die Synchronmotoren zwar ebenfalls eine Anfahrhilfe benötigen, um in die gewünschte Drehrichtung zu starten, jedoch ohne eine derartige Vorgabe oft durch Schwingbewegungen von selbst in einer undefinierten Richtung anlaufen. Somit kann zwar die Drehrichtung nicht vorgegeben werden, jedoch kommt ohne zusätzlichen Aufwand für eine Anfahrhilfe eine Drehbewegung in eine der beiden Richtungen mit einer zur Frequenz der Wechselspannung proportionalen Drehzahl zustande. Dies kann für viele einfache Anwendungen, wie z.B. für kleine Wasserpumpen, wie z.B. für Laugenpumpen von Waschmaschinen oder für Aquariumpumpen ausreichend sein, um den Zweck der Pumpe zu erfüllen.

Nachteilig ist bei der Verwendung von einphasigen Synchronmotoren jedoch, dass eben die Drehrichtung nicht definiert vorgegeben werden kann. Ferner können die anfänglichen Schwingbewegungen des Rotors beim Starten aus dem Stillstand zu Geräuschen führen, die für den Benutzer unerwünscht sein können. Ferner können weder ein Blockieren des Rotors noch Lastzustände erkannt werden.

Alternativ ist es daher für einfache Anwendungen bekannt, Spaltpolmotoren zu verwenden, welche ebenfalls mit einphasigem Wechselstrom betrieben werden können, jedoch eine definierte Drehrichtung aufweisen. Ferner können Spaltpolmotoren mechanisch sehr einfach aufgebaut sein. Dies alles kann die Kosten für Spaltmotoren gering halten, so dass sie sich für einfache Anwendungen sehr kostengünstig einsetzen lassen.

Nachteilig ist bei Spaltpolmotoren jedoch, dass die definierte Drehrichtung durch die Polanordnung vorgegeben ist und sich somit nicht elektrisch ändern lässt. Nachteilig ist weiterhin, dass Spaltpolmotoren einen vergleichsweise schlechten Wirkungsgrad von ca. 20 % aufweisen, was zu einem vergleichsweise hohen Energieverbrauch führen kann. Ferner kann es durch die entsprechenden Stromwärmeverluste zu einer unerwünscht hohen Erwärmung des elektrischen Motors und damit der gesamten z.B. Pumpe kommen, was für viele Anwendungen nicht gewollt sein kann.

Die Europäische Anmeldung EP 0 872 949 A2 offenbart einen zwei-strängigen Synchronantrieb mit einem zwei-strängigen Synchronmotor mit zwei Wicklungssträngen, einer Steuerungselektronik mit zwei Schaltern zum Schalten der beiden Wicklungsstränge und einem Netzspannungsanschluss zum Abgriff einer Netzspannung.

Der Erfindung stellt sich somit das Problem, einen zwei-strängigen Synchronantrieb der eingangsbeschriebenen Art bereitzustellen, welcher geregelt und dennoch direkt am Netz betrieben werden kann. Insbesondere soll ein derartiger zwei-strängiger Synchronantrieb einfach betrieben und insbesondere einfach aus dem Stillstand gestartet werden können. Erfindungsgemäß wird dieses Problem durch einen zwei-strängigen Synchronantrieb mit den Merkmalen des Patentanspruchs 1, und durch ein elektrisches Gerät mit den Merkmalen des Patentanspruchs 3 gelöst. Vorteilhafte Ausgestaltungen und Weiterbildungen der Erfindung ergeben sich aus den nachfolgenden Unteransprüchen.

Somit betrifft die vorliegende Erfindung einen zwei-strängigen Synchronantrieb mit einem zwei-strängigen Synchronmotor mit einem ersten Wicklungsstrang und mit einem zweiten Wicklungsstrang, mit einer Steuerungselektronik mit einem ersten Schalter zum Schalten des ersten Wicklungsstranges und mit einem zweiten Schalter zum Schalten des zweiten Wicklungsstranges und mit einem Netzspannungsanschluss zum Abgriff einer Netzspannung. Die beiden Wicklungsstränge sind Bestandteile des Stators. Die Netzspannung kann von einer elektrischen Energiequelle, wie z.B. über eine Steckdose oder durch einen Akkumulator oder dergleichen, bereitgestellt werden. Die Schalter sind derart ausgebildet, so dass sie die Netzspannung durchlassen oder sperren können. Diese beiden Zustände können für beide Schalter unabhängig voneinander von der Steuerungselektronik geschaltet werden.

Der erste Wicklungsstrang ist hinsichtlich seiner Wicklung derart ausgebildet, so dass beim Einschalten des ersten Schalters bei voller Netzspannung der Nennstrom im ersten Wicklungsstrang fließen kann. Auf diese Weise kann erfindungsgemäß mit einer sehr einfachen Steuerungselektronik sowohl ein Anfahren des Synchronmotors aus dem Stillstand als auch ein Nennbetrieb realisiert werden, indem der erste Strang durch Ein-/Ausschalten mittels des ersten Schalters zwischen stromlos im Stillstand und bestromt im Nennbetrieb geschaltet werden kann. Das Anfahren kann durch das gezielte Schalten des zweiten Schalters und damit Bestromen des zweiten Wicklungsstranges erfolgen. Auf diese Weise kann ein zwei-strängiger Synchronantrieb mit einfacher Elektronik geschaffen werden, welcher einfach betrieben und einfach gestartet werden kann.

Vorteilhaft ist hierbei, dass durch den Betrieb des zwei-strängigen Synchronantriebs direkt am Netz bzw. mit Netzspannung auf einen Frequenzumrichter verzichtet und der damit verbundene Aufwand, insbesondere die entsprechenden Kosten, eingespart werden kann. Vorteilhaft ist auch, dass durch die Verwendung eines Synchronmotors im Vergleich zu z.B. einem Spaltmotor ein deutlich höherer Wirkungsgrad von z.B. 50% erreicht werden kann. Dies kann aufgrund des vergleichsweise geringen Verbrauchs an elektrischer Energie ein wichtiges Kaufkriterium für den Benutzer eines entsprechenden elektrischen Gerätes sein.

Gemäß der vorliegenden Erfindung ist der zweite Wicklungsstrang hinsichtlich seiner Wicklung derart ausgebildet, so dass beim Einschalten des zweiten Schalters bei voller Netzspannung ein höheres Drehmoment des zweiten Wicklungsstranges als mit dem Nennstrom erzeugt werden kann. Hierdurch kann das Anfahren des erfindungsgemäßen zwei-strängigen Synchronantriebs unterstützt werden. Außerhalb des Startens des zwei-strängigen Synchronantriebs kann der zweite Wicklungsstrang über das Schalten des zweiten Schalters anders als beim Anfahren betrieben werden, so dass eine Überhitzung des zweiten Wicklungsstranges aufgrund der Übererregung des zwei-strängigen Synchronmotors vermieden werden kann. Hierzu kann das Anfahren auf lediglich einen kurzen Moment von üblicherweise ca. unter einer Sekunde beschränkt werden.

Der erste Wicklungsstrang weist hierzu eine höhere Windungszahl als der zweite Wicklungsstrang auf, so dass dieser Effekt einfach erreicht werden kann.

Gemäß einem weiteren Aspekt der vorliegenden Erfindung ist der erste Schalter ein Triac-Schalter und bzw. oder ist der zweite Schalter ein Triac-Schalter. Hierunter wird eine "Triode for Alternating Current" oder eine Zweirichtungs-Thyristortriode verstanden. Hierbei handelt es sich um ein elektronisches Bauteil mit Halbleiterschichtstruktur, welches vom Prinzip her eine Antiparallelschaltung von zwei Thyristoren darstellt. Auf diese Weise wird es ermöglicht, Wechselstrom zu schalten, wohingegen ein einzelner Thyristor nur in einer Richtung schalten kann und somit in eingeschaltetem Zustand wie eine Diode wirkt. Ein Triac-Schalter wird über das Gate gezündet und bleibt solange leitend, bis der Haltestrom unterschritten wird.

Vorteilhaft ist hierbei, dass mittels eines Triac-Schalters bzw. mittels zweier Triac-Schalter die gewünschte Funktion des Ein-/Ausschaltens von Wechselstrom bzw. Wechselspannung der beiden Wicklungsstränge des zwei-strängigen Synchronmotors einfach, verlässlich und kostengünstig realisiert werden kann. Mit anderen Worten kann der erfindungsgemäß zwei-strängige Synchronantrieb mittels einer vergleichsweise einfachen und kostengünstigen Elektronik umgesetzt werden, wobei dennoch ein einfaches Anfahren möglich ist.

Gemäß der vorliegenden Erfindung weist der zwei-strängige Synchronantrieb ferner einen Temperatursensor zur Erfassung einer Temperatur des zweiten Wicklungsstranges auf. Auf einen Temperatursensor zur Erfassung einer Temperatur des ersten Wicklungsstranges kann erfindungsgemäß verzichtet werden. Dies ist dadurch begründet, dass der erste Wicklungsstrang konstruktionsbedingt nicht thermisch überlastet werden kann, weil der erste Wicklungsstrang immer nur mit der Netzspannung als maximale Spannung belastet werden kann, d.h. immer nur im Nennbetrieb betrieben werden kann.

Hingegen kann der zweite Wicklungsstrang zumindest kurzzeitig beim Anfahren mit Überlast betrieben werden. Dies kann für einen kurzen Zeitraum wie z.B. für ca. 0,5 Sekunden ohne thermische Überlastung der Wicklungen des zweiten Wicklungsstranges erfolgen, jedoch ist aus Sicherheitsgründen im zweiten Wicklungsstrang eine thermische Überwachung mittels Temperatursensor erforderlich, weil diese theoretisch auftreten kann.

Somit kann auf eine thermische Überwachung des ersten Wicklungsstranges verzichtet werden. Dies kann die Überwachung des zwei-strängigen Synchronmotors einfacher und günstiger werden lassen, weil nur ein Temperatursensor als günstiges Bauteil für den zweiten Wicklungsstrang erforderlich ist.

Mittels eines zwei-strängigen Synchronmotors kann ein zuvor beschriebener zwei-strängiger Synchronantrieb umgesetzt werden.

Vorteilhaft ist hierbei auch, dass ein und derselbe zwei-strängige Synchronmotor mit verschiedenen Steuerungselektroniken kombiniert werden kann, um verschiedene erfindungsgemäße zwei-strängige Synchronantrieben bereitzustellen. Hierdurch kann der zwei-strängige Synchronantrieb modular aufgebaut und je nach Anwendungsfall konfiguriert werden. Mit anderen Worten kann auf diese Weise eine Plattformstrategie umgesetzt werden.

Die vorliegende Erfindung betrifft auch ein elektrisches Gerät, vorzugsweise ein elektrisches Haushaltsgerät, vorzugsweise eine Waschmaschine, einen Wäschetrockner, einen Herd oder eine Spülmaschine, mit einem Synchronantrieb wie zuvor beschrieben. Vorteilhaft ist hierbei, dass bei derartigen Anwendungen ein einfacher und kostengünstiger zwei-strängiger Synchronantrieb vollkommen ausreichend sein kann, um die gewünschte Wirkung wie z.B. das Abpumpen der Lauge zu realisieren. Gleichzeitig können die Kosten des elektrischen Gerätes gering gehalten werden, was für viele Benutzer ein wesentliches Kaufkriterium sein kann. Ferner können bei geringen Kosten die zuvor beschriebenen Vorteile wie z.B. ein einfaches und leises Anlaufen des zwei-strängigen Synchronantriebs bereitgestellt werden.

Ein Verfahren zum Betrieb eines zwei-strängigen Synchronantriebs wie zuvor beschrieben kann den Schritt aufweisen:
- Anlaufen des Rotors des zwei-strängigen Synchronmotors durch im Wesentlichen gleichzeitige Bestromung beider Wicklungsstränge mit Wechselspannung mit voller Netzspannung.

Somit wird für den Anlauf des zwei-strängigen Synchronantriebs die komplette Netzspannung auf beide Wicklungsstränge des Synchronmotors geschaltet. Dabei wird der Synchronmotor aufgrund der Auslegung des zweiten Wicklungsstranges bewusst übererregt, um ein starkes Anlaufmoment zu erzeugen und ein schnelles Anlaufen von z.B. unter ca. 0,5 Sekunden zu ermöglichen. Die hierbei auftretende hohe thermische Erwärmung des zweiten Wicklungsstranges kann zur Erreichung dieser Vorteile in Kauf genommen werden, weil das Anlaufen nur sehr kurzzeitig erfolgt. Vorzugsweise werden der erste Wicklungsstrang mit einem Phasenwinkel von ca. 60° und der zweite Wicklungsstrang mit einem Phasenwinkel von ca. 90° betrieben.

Das Verfahren kann den vorangehenden Schritt aufweisen:
- Ausrichten des Rotors des zwei-strängigen Synchronmotors unter einem Polpaar eines Wicklungsstranges des Stators des zwei-strängigen Synchronmotors durch Bestromung wenigstens eines Wicklungsstranges mit Gleichstrom, vorzugsweise mit wenigstens einem Gleichstromimpuls oder mit mehreren Gleichstromimpulsen.

Beim Anlauf des zwei-strängigen Synchronantriebs wie zuvor beschrieben würde sich der zwei-strängige Synchronmotor wie ein "Zappelmotor" verhalten, d.h. wie ein einsträngiger Synchronmotor, und zunächst ein Pendelmoment erfahren, bis der zwei-strängige Synchronmotor auf die von der Netzfrequenz fest vorgegebene Drehzahl in Tritt fallen würde.

Um das Anlaufverhalten zu verbessern, indem ein Pendeln des Rotors vermieden werden kann, sowie um eine definierte Drehrichtung einzustellen, kann eine Ansteuerung der beiden Schalter derart vorgesehen werden, dass der Rotor zunächst über Gleichstromimpulse in eine Initiallage versetzt wird. Dies kann dadurch erfolgen, dass zur Erzeugung des Gleichstroms lediglich die jeweils positive Welle des Wechselstroms verwendet wird. Dies kann durch eine entsprechende Schaltung bzw. Ansteuerung der beiden Schalter erfolgen.

Ist die Initiallage eingenommen, kann auf eine Bestromung der Wicklungsstränge verzichtet werden, da die Pole des Rotors aufgrund der Reluktanz selbsttätig unter den Polen des Stators stehenbleiben.

Das Ausrichten kann wie zuvor beschrieben erfolgen, indem zuerst in einem ersten Teilschritt beide Wicklungsstränge mit Gleichstrom bestromt werden und danach in einem zweiten Teilschritt lediglich ein Wicklungsstrang, vorzugsweise der erste Wicklungsstrang, mit Gleichstrom bestromt wird.

Durch die anfängliche Bestromung beider Wicklungsstränge kann die Massenträgheit des stillstehenden Rotors schneller überwunden werden, so dass die Anlaufphase bzw. das vorherige Ausrichten verkürzt werden kann. Ist dies geschehen, kann die Ausrichtung des Rotors unter die Pole des Stators mit nur einem Wicklungsstrang erfolgen, um elektrische Energie zu sparen.

Hierzu den ersten Wicklungsstrang zu verwenden kann dahingehend vorteilhaft sein, dass der erste Wicklungsstrang konstruktionsbedingt nicht überhitzt werden kann, der zweite Wicklungsstrang schon, was auch in der Anlaufphase geschehen kann. Wird daher der zweite Wicklungsstrang beim Ausrichten vor der Anlaufphase möglichst wenig bestromt, so kann auch seine Erwärmung beim Ausrichten so gering wie möglich gehalten werden, um ein Überhitzen im übererregten Betrieb des Anlaufens zu vermeiden bzw. zumindest möglichst lange heraus zu zögern.

Das Verfahren kann den nachfolgenden Schritt aufweisen:
- Angleichen des Rotors des zwei-strängigen Synchronmotors an den Nennbetrieb durch Bestromung des zweiten Wicklungsstranges mit Wechselspannung mit einem Phasenanschnitt von wenigstens 90° gegenüber dem ersten Wicklungsstrang,
wobei der Phasenanschnitt von Null beginnend bis zu einem endgültigen Phasenanschnittswert erhöht wird.

Ist der Anlauf des zwei-strängigen Synchronmotors erfolgt, so kann der Rotor in seinen Nennbetrieb übergeleitet werden. Hierzu erfährt der Rotor des zwei-strängigen Synchronmotors einen gezielten Drehmomentimpuls, welcher durch einen Phasenanschnitt beider Wicklungsstränge realisiert werden kann. Dieser Impuls wird auch durch die Mechanik, durch die zu überwindende Massenträgheit, durch die Gestaltung des Rotors oder sonstige mechanische Widerstände bestimmt.

Ein Phasenanschnitt kann durch eine Totzeit nach dem Netzspannungsnulldurchgang realisiert werden. Dadurch erhält man gleichzeitig eine Phasenverschiebung der Ströme der beiden Wicklungsstränge, die für ein Drehfeld sorgen und damit einen effizienten Lauf einer Drehrichtung mit sich führen kann. Die Wahl eines Phasenanschnitts von 90° und mehr kann in Abhängigkeit der Wicklungsauslegung der beiden Wicklungsstränge erfolgen.

Während dieses Schrittes werden die Spannungen der beiden Wicklungsstränge durch die Schaltung der beiden Schalter ungefähr gleich eingestellt. Vorzugsweise wird der effektive Strom des zweiten Wicklungsstranges etwas geringer als der effektive Strom des ersten Wicklungsstranges eingestellt.

Das Verfahren kann den nachfolgenden Schritt aufweisen:
- Betreiben des Rotors des zwei-strängigen Synchronmotors im Nennbetrieb durch Bestromung des zweiten Wicklungsstranges mit Wechselspannung mit dem endgültigen Phasenanschnittswert des vorangegangenen Schrittes gegenüber dem ersten Wicklungsstrang.

Ist das Angleichen des Rotors des zwei-strängigen Synchronmotors in den Nennbetrieb erfolgt, so wird der Rotor im vorliegenden Schritt im Nennbetrieb betrieben, der auch als Vollwellenbetrieb bezeichnet werden kann. Hierbei kann auch die Einstellung des Lastpunkts erfolgen. Dieser Zustand des Nennbetriebs ist üblicherweise nach wenigen Netzperioden erreicht. Im Nennbetrieb wird mittels der Wahl des Phasenanschnitts die Effektivspannung des zweiten Wicklungsstranges reduziert. Damit sinkt der Strom des zweiten Wicklungsstranges von der Übererregung auf den Nennstrom, um den entsprechenden Lastpunkt zu realisieren. Verschiedene Lastpunkte sind möglich.

Das Verfahren kann den nachfolgenden Schritt aufweisen:
- Bestimmen einer Last des Rotors des zwei-strängigen Synchronmotors im Nennbetrieb durch Erfassung der induzierten Spannung des zweiten Wicklungsstranges im Nennbetrieb während eines Zeitraums, während dem der erste Schalter bzw. der zweite Schalter sperrt.

Mit anderen Worten ist es bei dem erfindungsgemäßen zwei-strängigen Synchronantrieb möglich, die induzierte Spannung am zweiten Wicklungsstrang zu messen, weil dieser Wicklungsstrang im Nennbetrieb nicht voll durchgesteuert wird. Die induzierte Spannung lässt sich in den Augenblicken ermitteln, wenn der zweite Schalter sperrt, d.h. wenn kein Strom fließt. Dies ergibt sich beim Phasenanschnitt.

Über diese erfasste induzierte Spannung (EMK) kann z.B. die Last des Rotors ermittelt werden, weil die Phasenlage der EMK sich in Abhängigkeit der Last ändert. Hierdurch ändert sich auch die gemessene Amplitude im Zeitpunkt, zu dem der zweite Schalter sperrt.

Ausgehend von der erfassten Last ist ferner eine Rückberechnung möglich, wodurch diese Last verursacht wurde, z.B. ob sich der Rotor links- oder rechtsherum gedreht hat. Stellt sich z.B. im Anlauf die der gewünschten Drehrichtung entgegengesetzte Drehrichtung ein, z.B. durch eine kurzzeitige Blockade, so fällt der zwei-strängige Synchronmotor außer Tritt, nachdem die Reduzierung auf den Nennstrom erfolgt ist. Grund hierfür ist, dass in dieser Drehrichtung nur ein sehr kleines Drehfeld existiert. Dieses Verhalten kann durch die fehlende EMK ermittelt und der Anlauf neu initiiert werden. Auf diese Weise können somit auch Blockierung des Rotors des zwei-strängigen Synchronmotors erkannt und korrigiert werden.

Das Anlaufen, Angleichen oder Betreiben des Rotors des zwei-strängigen Synchronmotors kann entgegengesetzt zur konstruktiv bevorzugten Drehrichtung des zwei-strängigen Synchronmotors erfolgen.

Diesem Aspekt liegt die Erkenntnis zugrunde, dass die Drehrichtung des Rotors des zwei-strängigen Synchronmotors fest vorgegeben ist, da sich die Wicklungsstränge unterscheiden und im Nennbetrieb der zweite Wicklungsstrang dem ersten Wicklungsstrang durch den Phasenanschnitt nacheilt. Dies ist vorteilhaft, weil sich durch die feste bzw. bevorzugte Drehrichtung des Rotors ein verbesserter hydraulischer Wirkungsgrad z.B. beim Betrieb einer Laugenpumpe einer Waschmaschine ergeben kann, was aufgrund des effizienteren Energieverbrauchs vom Benutzer sehr gewünscht sein kann. Somit wäre für einen Drehrichtungswechsel ein mechanischer Tausch der beiden Wicklungsstränge erforderlich.

Über den Phasenanschnitt ist es jedoch dennoch möglich, den Rotor aus dem Stillstand in die nicht-geeignete Drehrichtung anlaufen zu lassen und mit dieser Drehrichtung zu betreiben. Dies ist zwar lediglich für kleine Lasten und bzw. oder einen kurzzeitigen Betrieb möglich. Dies kann jedoch ausreichend sein, um z.B. bei einer Laugenpumpe einer Waschmaschine einen Reinigungsvorgang des Pumpenrades zu ermöglichen.

Das Verfahren kann ferner die weiteren Schritte aufweisen:
- Erfassen einer Temperatur des zweiten Wicklungsstranges des Rotors des zwei-strängigen Synchronmotors mittels eines Temperatursensors, und
- bei Überschreiten einer vorbestimmten Temperatur durch die erfasste Temperatur, Abschalten des zwei-strängigen Synchronmotors.

Auf diese Weise kann eine Temperaturüberwachung bzw. ein Schutz vor thermischer Überlastung des zwei-strängigen Synchronmotors erfolgen. Diese Überwachung kann die ganze Zeit parallel zu den zuvor beschriebenen Schritten nach dem Schritt des Ausrichtens des Rotors als Sicherheitsmaßnahme erfolgen, um einen sicheren Betrieb des zwei-strängigen Synchronantriebs zu gewährleisten. Das Abschalten des zwei-strängigen Synchronmotors kann z.B. durch das Sperren beider Schalter erfolgen.

Ein Ausführungsbeispiel der Erfindung ist in den Zeichnungen rein schematisch dargestellt und wird nachfolgend näher beschrieben. Es zeigt
- Figur 1: eine schematische Darstellung eines erfindungsgemäßen zwei-strängigen Synchronantriebs;
- Figur 2: ein Ablaufdiagramm eines Verfahrens zum Betrieb des erfindungsgemäßen zweisträngigen Synchronantriebs; und
- Figur 3: einen Verlauf der Spannungen und Ströme für beide Wicklungsstränge des zweisträngigen Synchronmotors.

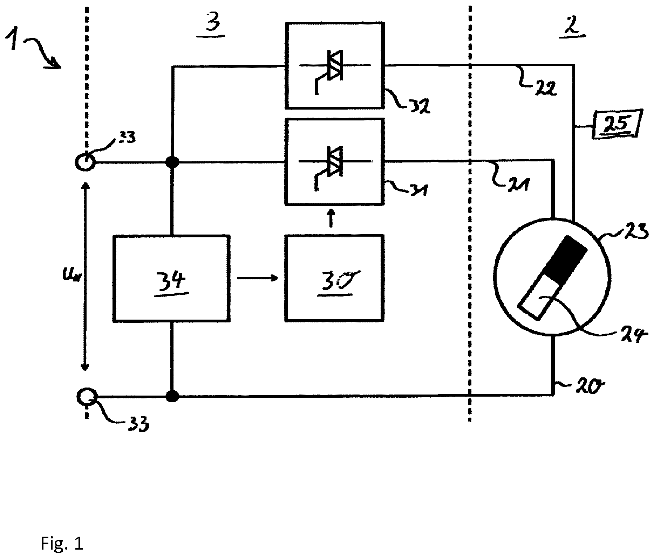

Figur 1 zeigt eine schematische Darstellung eines erfindungsgemäßen zwei-strängigen Synchronantriebs 1. Der zwei-strängige Synchronantrieb 1 weist einen zwei-strängigen Synchronmotor 2 und eine Steuerungselektronik 3 auf. Die Steuerungselektronik 3 weist ein Paar von Kontakten auf, welche den Netzspannungsanschluss 33 des zwei-strängigen Synchronantriebs 1 bilden. Über den Netzspannungsanschluss 33 ist der zwei-strängige Synchronantrieb 1 mit einem Versorgungsnetz verbunden, welches eine Netzspannung U_{N} bereitstellt.

Der zwei-strängige Synchronmotor 2 weist einen Stator 23 und einen Rotor 24 auf. Der Stator 23 weist einen ersten Wicklungsstrang 21 und einen zweiten Wicklungsstrang 22 auf, wobei der erste Wicklungsstrang 21 eine höhere Windungsanzahl als der zweite Wicklungsstrang 22 aufweist. Die beiden Wicklungsstränge 21, 22 sind auf der einen Seite jeweils mit einem Schalter 31, 32 der Steuerungselektronik 3 elektrisch leitfähig verbunden, siehe weiter unten. Auf der anderen Seite sind die beiden Wicklungsstränge 21, 22 mit einem Bezugspotential 20 der Steuerungselektronik 2 elektrisch leitfähig verbunden. Der zweite Wicklungsstrang 22 weist ein thermisches Überwachungselement 25 in Form eines Temperatursensors 25 auf.

Die Steuerungselektronik 3 weist eine Steuerungseinheit 30 in Form eines Mikrocontrollers 30 auf. Die Steuerungselektronik 3 weist ferner einen ersten Schalter 31 in Form eines ersten Triac-Schalters 31 und einen zweiten Schalter 32 in Form eines zweiten Triac-Schalters 32 auf. Die beiden Triac-Schalter 31, 32 sind auf einer Seite mit einem Kontakt des Netzspannungsanschlusses 33 elektrisch leitfähig verbunden. Auf der anderen Seite sind die beiden Triac-Schalter 31, 32 mit den beiden Wicklungssträngen 21, 22 des zwei-strängigen Synchronmotors 2 elektrisch leitfähig verbunden. Die beiden Triac-Schalter 31, 32 können durch den Mikrocontroller 30 zwischen zwei Schaltungszuständen hin und her geschaltet werden, so dass sie jeweils einen elektrisch leitfähigen Kontakt zwischen dem jeweiligen Wicklungsstrang 31, 32 und dem einem Kontakt des Netzspannungsanschlusses 33 herstellen oder sperren können. Dabei können die beiden Triac-Schalter 31, 32 von der Steuerungselektronik 3 phasenverschoben geschaltet werden.

Die Steuerungselektronik 3 weist ferner eine Spannungsmesseinheit 34 auf, welche eine Spannung U zwischen den beiden Triac-Schaltern 31, 32 und dem Bezugspotential 20 erfassen kann. Der Mikrocontroller 30 kann von der Spannungsmesseinheit 34 den erfassten Wert der Spannung U zur Verfügung gestellt bekommen. Ferner kann der Mikrocontroller 30 den erfassten Temperaturwert von dem Temperatursensor 25 übergeben bekommen.

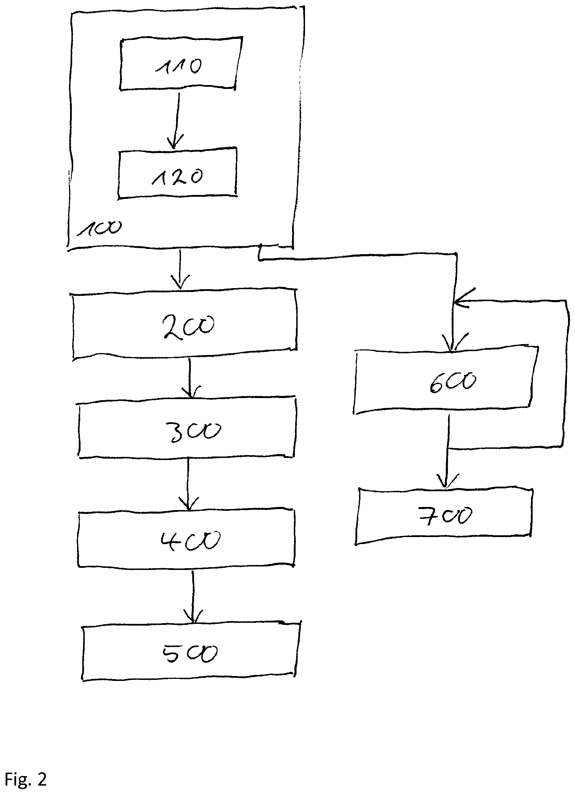

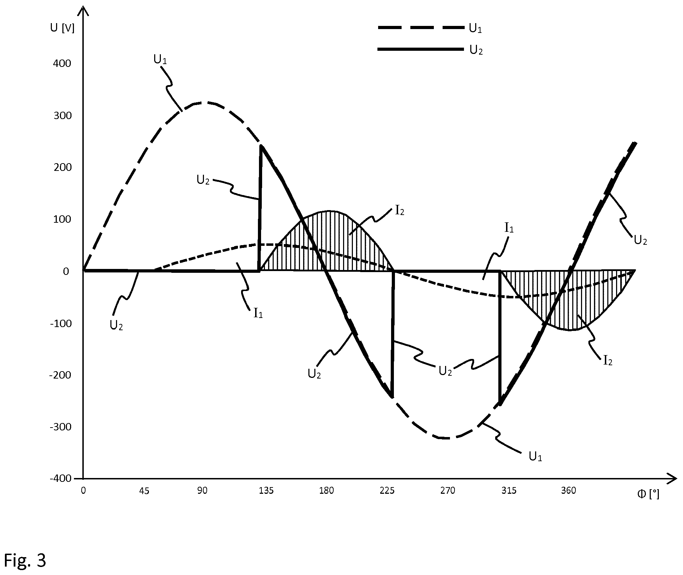

Figur 2 zeigt ein Ablaufdiagramm eines Verfahrens zum Betrieb des erfindungsgemäßen zwei-strängigen Synchronantriebs 1. Figur 3 zeigt einen Verlauf der Spannungen U₁, U₂ und Ströme I₁, I₂ für beide Wicklungsstränge 21, 22 des zwei-strängigen Synchronmotors 2.

Zuerst erfolgt ein Ausrichten 100 des Rotors 24 des zwei-strängigen Synchronmotors 2 unter einem Polpaar eines Wicklungsstranges 21, 22 des Stators 23, um eine definierte Anlaufstellung des Rotors 24 einzunehmen, die zu einer Drehung des Rotors 2 in definiert vorgegebener Drehrichtung führen kann. Hierzu wird der Rotor 24 durch mehrere Gleichstromimpulse zuerst beider Wicklungsstränge 21, 22 in einem ersten Teilschritt 110 und danach lediglich des ersten Wicklungsstranges 21 in einem zweiten Teilschritt 120 bestromt. Ist eine definierte Stellung des Rotors 24 unter den Polen des Stators 23 eingenommen, kann die Bestromung unterbleiben, da diese definierte Stellung durch die Reluktanz selbsttätig gehalten werden kann.

Nun kann das Anlaufen 200 des Rotors 24 des zwei-strängigen Synchronmotors 2 in der vorgegebenen Drehrichtung durch im Wesentlichen gleichzeitige Bestromung beider Wicklungsstränge 21, 22 mit Wechselspannung U mit voller Netzspannung U_{N} erfolgen. Da der erste Wicklungsstrang 21 auf den Nennbetrieb bzw. die Netzspannung U_{N} ausgelegt ist, kann die Netzspannung U_{N} durch das Schalten des ersten Triac-Schalters 31 direkt auf den ersten Wicklungsstrang 21 durchgeschaltet werden, so dass auf einen Frequenzumrichter verzichtet und der erste Wicklungsstrang 21 direkt an der Netzspannung U_{N} betrieben werden kann. Dies gilt im Anlauf 200 des Rotors 24 ebenso für den zweiten Wicklungsstrang 22, welcher jedoch mit einem geringfügigen Phasenversatz geschaltet wird. Beispielsweise werden der erste Wicklungsstrang 21 mit einem Phasenwinkel φ von ca. 60° und der zweite Wicklungsstrang 22 mit einem Phasenwinkel φ von ca. 90° betrieben.

Ferner ist der zweite Wicklungsstrang 22 derart ausgelegt, so dass der zweite Wicklungsstrang 22 bei der Versorgung mit der Netzspannung U_{N} übererregt ist. Hierdurch kann zwar das Anlaufen 200 des Rotors 24 beschleunigt werden, jedoch kann der Schritt des Anlaufens 200 nur kurzzeitig wie z.B. 0,5 Sekunden lang ausgeführt werden, um eine thermische Überlastung des zweiten Wicklungsstranges 22 zu vermeiden. Dies kann durch den Temperatursensor 25 überwacht werden, siehe weiter unten. Für den ersten Wicklungsstrang 21 ist keine Temperaturüberwachung erforderlich, da der erste Wicklungsstrang 21 nur mit der Netzspannung U_{N} und nicht übererregt betrieben werden kann.

Im folgenden Schritt des Angleichens 300 des Rotors 24 des zwei-strängigen Synchronmotors 2 an den Nennbetrieb erfolgt die Bestromung des zweiten Wicklungsstranges 22 mit Wechselspannung U mit einem Phasenanschnitt von wenigstens 90° gegenüber dem ersten Wicklungsstrang 21, wobei der Phasenanschnitt von Null beginnend bis zu einem endgültigen Phasenanschnittswert erhöht wird. Hierdurch kann vom Anlaufen 100 in den Nennbetrieb 400 übergeleitet werden.

Im folgenden Schritt des Betreibens 400 des Rotors 24 des zwei-strängigen Synchronmotors 2 im Nennbetrieb erfolgt die Bestromung des zweiten Wicklungsstranges 22 mit Wechselspannung mit dem endgültigen Phasenanschnittswert des vorangegangenen Schrittes des Angleichens 300 gegenüber dem ersten Wicklungsstrang 21. In diesem Zustand kann der dauerhafte Betrieb des zwei-strängigen Synchronantriebs 1 erfolgen.

Während des Betreibens 400 des Rotors 24 im Nennbetrieb kann ein Schritt des Bestimmens 500 einer Last des Rotors 24 des zwei-strängigen Synchronmotors 2 im Nennbetrieb dadurch erfolgen, dass die induzierte Spannung des zweiten Wicklungsstranges 22 im Nennbetrieb während eines Zeitraums, während dem der zweite Triac-Schalter 32 sperrt, erfasst wird. Während dieses Sperrens des zweiten Triac-Schalters 32 liegt am zweiten Wicklungsstrang 22 nicht die Netzspannung U_{N} sondern die aus der vorangehenden Bestromung resultierende induzierte Spannung an, welche während dieses Zeitraums von der Spannungsmesseinheit 34 erfasst und vom Mikrocontroller 30 ausgewertet werden kann. Aus dieser Spannung lässt sich die Last bestimmen.

Aus der Last wiederrum lässt sich z.B. die Drehrichtung bestimmen, so dass ein erfolgter Anlauf 200 in die falsche Drehrichtung erkannt, der zwei-strängige Synchronmotor 2 angehalten und erneut gestartet werden kann. Auch kann sich aus der Last ablesen lassen, falls gar keine Drehung des Rotors 24 erfolgt ist, z.B. weil der Rotor 24 blockiert ist. Auch in diesem Fall kann ein erneutes Anlaufen 200 des Rotors 24 vorgenommen werden.

Unter Umständen kann jedoch ein Anlauf 200 bzw. Betreiben 400 entgegengesetzt zur konstruktiv bevorzugten Drehrichtung des zwei-strängigen Synchronmotors gezielt erfolgen, z.B. als Reinigungsbetrieb einer Laugenpumpe einer Waschmaschine.

Parallel zu den vorangegangenen Schritten ab dem Anlaufen 200 des Rotors 24 kann ein fortlaufend wiederholendes Erfassen 600 einer Temperatur des zweiten Wicklungsstranges 22 des Rotors 24 des zwei-strängigen Synchronmotors 2 mittels des Temperatursensors 25 erfolgen, um die Temperatur des zweiten Wicklungsstranges 22 zu überwachen, da dieser zweite Wicklungsstrang 22 konstruktionsbedingt übererregt werden kann. Wird dabei erkannt, dass eine vorbestimmte Temperatur durch die erfasste Temperatur überschritten wird, kann ein Abschalten 700 des zwei-strängigen Synchronmotors 2 z.B. durch Sperren beider Triac-Schalter 31, 32 erfolgen, um die Bestromung der Wicklungsstränge 21, 22 zu beenden und eine weitere Erwärmung durch Bestromung zu vermeiden.

Auf diese Weise kann erfindungsgemäß ein zwei-strängiger Synchronantrieb 1 bereitgestellt werden, welcher geregelt und dennoch direkt an der Netzspannung U_{N} betrieben werden kann. Ferner kann dieser zwei-strängige Synchronantrieb 1 einfach betrieben und insbesondere einfach aus dem Stillstand gestartet werden.

### Bezugszeichenliste (Bestandteil der Beschreibung)

- I₁: Strom erster Wicklungsstrang 21
- I₂: Strom zweiter Wicklungsstrang 22

- U: Spannung
- U_{N}: Netzspannung
- U₁: Spannung erster Wicklungsstrang 21
- U₂: Spannung zweiter Wicklungsstrang 22

- φ: Phasenwinkel

- 1: zwei-strängiger Synchronantrieb

- 2: zwei-strängiger Synchronmotor
- 20: Bezugspotential
- 21: erster Wicklungsstrang
- 22: zweiter Wicklungsstrang
- 23: Stator; Ständer
- 24: Rotor; Läufer
- 25: thermisches Überwachungselement; Temperatursensor

- 3: Steuerungselektronik
- 30: Steuerungseinheit; Mikrocontroller
- 31: erster (Triac-)Schalter
- 32: zweiter (Triac-)Schalter
- 33: Netzspannungsanschluss; Paar von Kontakten
- 34: Spannungsmesseinheit

- 100: Ausrichten des Rotors 24
- 110: Bestromung beider Wicklungsstränge 21, 22
- 120: Bestromung eines Wicklungsstranges 21; 22
- 200: Anlaufen des Rotors 24
- 300: Angleichen des Rotors 24 an den Nennbetrieb
- 400: Betreiben des Rotors 24 im Nennbetrieb
- 500: Bestimmen einer Last des Rotors 24
- 600: Erfassen einer Temperatur des zweiten Wicklungsstranges 22
- 700: Abschalten des zwei-strängigen Synchronmotors 2

## Patentansprüche

1. Zwei-strängiger Synchronantrieb (1), mit
einem zwei-strängigen Synchronmotor (2) mit einem ersten Wicklungsstrang (21) und mit einem zweiten Wicklungsstrang (22),
einer Steuerungselektronik (3) mit einem ersten Schalter (31) zum Schalten des ersten Wicklungsstranges (21) und mit einem zweiten Schalter (32) zum Schalten des zweiten Wicklungsstranges (22),
einem Netzspannungsanschluss (33) zum Abgriff einer Netzspannung (U_{N}),
**dadurch gekennzeichnet, dass** der erste Wicklungsstrang (21) hinsichtlich seiner Wicklung derart ausgebildet ist, so dass beim Einschalten des ersten Schalters (31) bei voller Netzspannung (U_{N}) der Nennstrom im ersten Wicklungsstrang (21) fließt,
der zweite Wicklungsstrang (22) hinsichtlich seiner Wicklung derart ausgebildet ist, so dass beim Einschalten des zweiten Schalters (32) bei voller Netzspannung (U_{N}) ein höheres Drehmoment des zweiten Wicklungsstranges (22) als mit dem Nennstrom erzeugt wird,
der erste Wicklungsstrang (21) eine höhere Windungszahl als der zweite Wicklungsstrang (22) aufweist,
wobei ein Temperatursensor (25) zur Erfassung einer Temperatur des zweiten Wicklungsstranges (22) vorhanden ist, und
wobei kein Temperatursensor (25) zur Erfassung einer Temperatur des ersten Wicklungsstranges (21) vorhanden ist.

2. Zwei-strängiger Synchronantrieb (1) gemäß Anspruch 1,
wobei der erste Schalter (31) ein Triac-Schalter (31) ist, und/oder wobei der zweite Schalter (32) ein Triac-Schalter (32) ist.

3. Elektrisches Gerät, vorzugsweise elektrisches Haushaltsgerät, vorzugsweise Waschmaschine, Wäschetrockner, Herd oder Spülmaschine, mit einem Synchronantrieb (1) gemäß einem der Ansprüche 1 bis 2.

## Claims

1. Two-phase synchronous drive (1), comprising a two-phase synchronous motor (2) that has a first winding phase (21) and a second winding phase (22), an electronic control system (3) that has a first switch (31) for switching the first winding phase (21) and a second switch (32) for switching the second winding phase (22), and a mains voltage connection (33) for tapping a mains voltage (U_{N}), **characterised in that** the first winding phase (21) is designed in terms of its winding such that, when the first switch (31) is switched at full mains voltage (U_{N}), the rated current flows in the first winding phase (21), the second winding phase (22) is designed in terms of its winding such that, when the second switch (32) is switched at full mains voltage (U_{N}), a higher torque of the second winding phase (22) is generated than with the rated current, and the first winding phase (21) has a higher winding rate than the second winding phase (22), a temperature sensor (25) being provided for detecting a temperature of the second winding phase (22), and no temperature sensor (25) being provided for detecting a temperature of the first winding phase (21).

2. Two-phase synchronous drive (1) according to claim 1, wherein the first switch (31) is a triac switch (31), and/or wherein the second switch (32) is a triac switch (32).

3. Electrical device, preferably an electrical domestic appliance, preferably a washing machine, tumble dryer, cooker or dishwasher, comprising a synchronous drive (1) according to either claim 1 or claim 2.

## Revendications

1. Entraînement synchrone à double brin (1), comportant un moteur synchrone à double brin (2) présentant un premier brin d'enroulement (21) et un second brin d'enroulement (22), un système électronique de commande (3) présentant un premier commutateur (31) destiné à commuter le premier brin d'enroulement (21) et un second commutateur (32) destiné à commuter le second brin d'enroulement (22), une borne de tension de secteur (33) destinée à prélever une tension de secteur (U_{N}), **caractérisé en ce que** le premier brin d'enroulement (21) par rapport à son enroulement est réalisé de sorte que, lorsque le premier commutateur (31) est activé à pleine tension de secteur (U_{N}), le courant nominal dans le premier brin d'enroulement (21) circule, **en ce que** le second brin d'enroulement (22) est réalisé par rapport à son enroulement, de sorte que, lorsque le second commutateur (32) est activé à pleine tension de secteur (U_{N}), un couple du second brin d'enroulement (22) supérieur à celui du courant nominal est produit, le premier brin d'enroulement (21) présente un nombre de spires supérieur à celui du second brin d'enroulement (22), un capteur de température (25) destiné à détecter une température du second brin d'enroulement (22) étant prévu, et aucun capteur de température (25) destiné à détecter une température du premier brin d'enroulement (21) n'étant prévu.

2. Entraînement synchrone à double brin (1) selon la revendication 1, dans lequel le premier commutateur (31) est un commutateur Triac (31) et/ou dans lequel le second commutateur (32) est un commutateur Triac (32).

3. Appareil électrique, de préférence appareil électroménager, de préférence machine à laver, lavante-séchante, cuisinière ou lave-vaisselle, à entraînement synchrone (1) selon l'une des revendications 1 à 2.
